(19) **Europäisches Patentamt European Patent Office Office européen des brevets**

(11) **EP 1 281 093 B1**

(12) **FASCICULE DE BREVET EUROPEEN**

(45) Date de publication et mention de la délivrance du brevet:
**28.01.2009 Bulletin 2009/05**

(21) Numéro de dépôt: **01925636.1**

(22) Date de dépôt: **12.04.2001**

(51) Int Cl.:
*G01S 5/02* *(2006.01)* *G01S 5/14* *(2006.01)*

(86) Numéro de dépôt international:
**PCT/FR2001/001138**

(87) Numéro de publication internationale:
**WO 2001/081943 (01.11.2001 Gazette 2001/44)**

(54) **PROCEDE ET DISPOSITIF DE DETERMINATION INSTANTANEE D'ORIENTATION, A BASE DE SIGNAUX DE POSITIONNEMENT PAR SATELLITES**

VORRICHTUNG UND VERFAHREN ZUR AUGENBLICKLICHEN BESTIMMUNG DER ORIENTIERUNG AUS SATELLITENPOSITIONSSIGNALEN

METHOD AND DEVICE FOR INSTANTANEOUS DETERMINATION OF ORIENTATION, BASED ON SATELLITE POSITIONING SIGNALS

(84) Etats contractants désignés:
**AT BE CH CY DE DK ES FI FR GB GR IE IT LI LU MC NL PT SE TR**

(30) Priorité: **21.04.2000 FR 0005183**

(43) Date de publication de la demande:
**05.02.2003 Bulletin 2003/06**

(73) Titulaire: **Magellan Navigation S.A.S.
44477 Carquefou Cédex (FR)**

(72) Inventeur: **GOUNON, René
F-94117 Arcueil Cedex (FR)**

(74) Mandataire: **Guérin, Michel
Marks & Clerk France
Conseils en Propriété Industrielle
Immeuble " Visium "
22, avenue Aristide Briand
94117 Arcueil Cedex (FR)**

(56) Documents cités:
**US-A- 5 933 110**

• **JUANG J -C ET AL: "DEVELOPMENT OF GPS-BASED ATTITUDE DETERMINATION ALGORITHMS" IEEE TRANSACTIONS ON AEROSPACE AND ELECTRONIC SYSTEMS,US, IEEE INC. NEW YORK, vol. 33, no. 3, juillet 1997 (1997-07), pages 968-976, XP000866842 ISSN: 0018-9251**
• **BROWN R A: "INSTANTANEOUS GPS ATTITUDE DETERMINATION" PROCEEDINGS OF THE POSITION LOCATION AND NAVIGATION SYMPOSIUM (PLANS),US,NEW YORK, IEEE, vol. -, 1992, pages 113-120, XP000344293 ISBN: 0-7803-0468-3**

## Description

L'invention concerne la détermination précise et rapide de l'orientation d'un mobile dans l'espace.

Typiquement, la navigation maritime nécessite une connaissance du cap suivi par un navire, qu'il soit en route, en manoeuvre, ou à l'arrêt. L'information de cap est une information sur l'orientation de l'axe longitudinal du navire dans un plan horizontal. L'invention sera décrite principalement à propos de la détermination du cap d'un navire ou d'un aéronef, mais elle est applicable à d'autres informations d'orientation d'un mobile, y compris en dehors du plan horizontal : une information d'attitude en roulis et tangage est une autre information intéressante, en navigation maritime comme en navigation aérienne, bien qu'elle ait en général moins besoin de précision que l'information de cap. L'information de cap ou d'orientation d'un véhicule terrestre est également intéressante. D'autres exemples d'application peuvent être envisagés tels qu'une information d'orientation d'une grue, d'une arme de tir, etc.

La mesure de cap s'effectue traditionnellement à l'aide d'un compas magnétique, d'un compas gyroscopique, ou d'une centrale inertielle.

Le compas magnétique nécessite des corrections, dues à la différence entre le nord géographique et le nord magnétique, et dues aux masses magnétiques perturbantes dans l'environnement du compas.

Le compas gyroscopique, entretenu électriquement, est insensible aux variations magnétiques, et est très largement utilisé dans les navires. Mais les difficultés d'installation, la diminution de précision aux latitudes élevées, l'entretien mécanique, et le coût lorsqu'on veut une précision élevée, sont des handicaps importants.

Les centrales inertielles fournissent une mesure de qualité mais sont coûteuses et doivent être recalées périodiquement à l'aide d'autres moyens de mesure.

On peut également envisager d'utiliser, pour la détermination d'orientation, des moyens de mesure de position par satellites, utilisant par exemple les signaux radio émis par les satellites du système GPS (Global Positionning System).

En utilisant plusieurs antennes de réception localisées en des points différents du navire (ou de l'aéronef), et en déterminant par des mesures différentielles les positions relatives des antennes, on peut déterminer l'attitude en cap, roulis, tangage. La précision obtenue dans des conditions de réception favorables peut être de 3 milliradians en cap et de 6 à 8 milliradians en roulis ou tangage, en fonction de la distance entre les antennes.

Mais jusqu'à maintenant il fallait un temps important (plusieurs minutes) pour obtenir l'information précise désirée. Ceci n'est pas gênant pour un navire qui fait route en haute mer, mais cela peut être rédhibitoire dans d'autres conditions, par exemple pour un navire en manoeuvre dans une zone portuaire où la réception de signaux des satellites est fréquement coupée par des obstacles (ponts, grues, etc.).

Un but important de l'invention est donc de proposer un procédé et un dispositif permettant d'obtenir très rapidement une information de cap d'un véhicule mobile, ou plus généralement une information d'orientation d'un objet.

Un autre but de l'invention est de réduire la complexité du dispositif de détermination d'orientation en n'utilisant qu'une seule des bandes de fréquences radio émises par les: satellites des systèmes de positionnement par satellites. Classiquement, les satellites de ces systèmes (en particulier le système GPS) émettent sur deux bandes de fréquences généralement désignées par L1 et L2 et on sait qu'on peut accélérer l'obtention d'une information fiable de position en utilisant la deuxième fréquence, mais bien sûr au prix d'une complexité accrue que la présente invention cherche à éviter. L'invention permet d'obtenir, en utilisant une seule des bandes de fréquence, une information plus rapide que celle qu'on sait obtenir aujourd'hui en utilisant les deux bandes. Toutefois, si pour d'autres raisons on a besoin d'utiliser les deux bandes de fréquence, l'invention est compatible avec l'utilisation des deux bandes.

Pour atteindre ces buts, l'invention propose un procédé de détermination de l'orientation d'un mobile, utilisant deux antennes de réception de signaux radio issus de satellites de positionnement, placées en deux points fixes A et B du mobile, ce procédé comprenant la détermination périodique d'un jeu de 2p pseudo-distances entre les deux antennes et p satellites, la fourniture des 2p pseudo-distances à un organe de calcul de position, et le calcul par cet organe d'une position relative du point A par rapport au point B à partir des pseudo-distances d'une part et d'une position relative estimée du point A par rapport au point B d'autre part, ce procédé étant <u>caractérisé en ce que</u> le calcul de position relative du point A comprend, pour un jeu donné de 2p pseudo-distances reçu par l'organe de calcul :

- n calculs (n>1) de positon relative du point A, faisant intervenir respectivement n positions estimées initiales $Ae_1$ à $Ae_n$, toutes situées à la même distance D du point B mais correspondant à n orientations différentes autour du point B, les n calculs fournissant n positions calculées $Ac_1$ à $Ac_n$ du point A,
- le calcul des distances $d_1$ à $d_n$ entre le point B et chaque position calculée $Ac_1$ à $Ac_n$,
- la sélection d'une position calculée $Ac_k$ parmi les n positions calculées, telle que l'écart $(d_k - D)$ entre la distance correspondante $d_k$ et la distance D soit inférieur en valeur absolue à un seuil déterminé, la direction du vecteur $BAc_k$ représentant l'information d'orientation recherchée.

Par conséquent, au lieu de rechercher la position relative du point A par une procédure longue, par exemple itérative, faisant intervenir des jeux successifs de pseudo-distances jusqu'à obtention d'une solution satisfaisante, on effectue avec un seul jeu de pseudo-distances n calculs différents et on sélectionne la solution la plus adaptée, en utilisant la connaissance préalable que l'on a de la distance réelle entre les points A et B. Cette connaissance préalable permet d'éliminer toutes les solutions qui semblent exactes parce qu'elles vérifient les critères classiques de validité, mais ne sont pas exactes. Dans la technique antérieure, seuls des calculs ultérieurs, effectués sur de nouveaux jeux de pseudo-distances, permettaient de les éliminer progressivement sur des durées longues.

Ici, par exemple, si on suppose qu'un jeu de pseudo-distances sur la bande L1 est fourni toutes les 100 millisecondes, qu'un calcul de position dure quelques millisecondes, que n est égal à environ 12, et que les opérations de calcul et de comparaison de distances durent quelques milllisecondes, on voit qu'une information d'orientation est obtenue à l'intérieur de la durée de 100 millisecondes et qu'on peut donc obtenir une nouvelle information d'orientation pour chaque nouveau jeu de pseudo-distances. On peut donc parler de mesure d'orientation quasi-instantanée, faisant appel à une seule bande de fréquences (en principe L1) des satellites.

Comme on l'expliquera plus loin, le calcul de position (pour chacun des n calculs) peut se faire en deux étapes, une étape de détermination grossière n'utilisant que certaines des 2p pseudo-distances (celles qui correspondent aux satellites les moins sensibles aux erreurs de position estimée) et utilisant une des n positions estimées initiales $Ae_1$ à $Ae_n$ pour calculer une position approchée $Ap_1$ à $Ap_n$ du point A, et une deuxième étape de calcul plus précis, utilisant toutes les 2p pseudo-distances et utilisant comme position estimée la position approchée $Ap_1$ à $Ap_n$ qui vient d'être calculée dans la première étape.

De préférence, les n positions estimées initiales sont séparées d'une distance inférieure ou égale à la longueur d'onde λ de la fréquence porteuse des signaux issus des satellites.

Pour la détermination d'un cap (orientation dans le plan horizontal seulement), on répartira les n positions estimées initiales au moins autour d'un cercle de centre B et de rayon D. Le nombre n est alors au moins égal. à la partie entière de $1+ 2\pi D/\lambda$ si on veut que les distances entre positions estimées successives soient inférieures à λ.

Par exemple, si la longueur d'onde est d'environ 20 cm et si la distance D est d'environ 40 cm, on utilisera environ 12 ou 13 positions estimées initiales sur le cercle.

Dans le cas où le navire présente un roulis ou tangage important, on peut prévoir que les n positions sont réparties sur un anneau sphérique et non pas seulement sur un cercle. Pour une distance D de 40 cm et une longueur d'onde de 20 cm on peut prendre alors plutôt un nombre n de 25 à 50 positions estimées initiales, toutes à la distance D du point B, et réparties sur cet anneau sphérique.

Pour sélectionner une position calculée parmi les n, on fait intervenir d'abord la vérification que cette position est pratiquement à la distance D du point B, mais on peut faire intervenir d'autres critères pour éliminer une position qui serait à la bonne distance ou presque mais qui ne répondrait pas à ces autres critères.

Parmi ces autres critères il y a la cohérence de la mesure de position sur les p satellites lorsqu'il y a plus de quatre satellites. Un calcul de position par satellite s'accompagne généralement d'un calcul dit « calcul de résidus » aboutissant à une valeur de cohérence entre les pseudo-distances mesurées pour chaque satellite. On éliminera des positions dont la valeur de cohérence n'est pas satisfaisante.

Un autre critère, applicable dans le cas de la mesure de cap d'un navire en présence de roulis ou de tangage, est le suivant : on calcule l'angle de roulis ou tangage défini par la position calculée du point A relativement au point B, et on élimine la position calculée si l'angle de roulis ou tangage dépasse un seuil déterminé correspondant à un angle de roulis ou de tangage non vraisemblable ou trop important pour permettre une bonne mesure du cap.

Enfin, l'invention a pour objet non seulement le procédé de détermination d'orientation dont les grandes lignes viennent d'être décrites, mais aussi un dispositif de détermination de l'orientation d'un mobile capable de mettre en oeuvre ce procédé. Le dispositif selon l'invention comprend au moins deux antennes de réception de signaux de positionnement par satellite, fixées sur le mobile en deux points A et B séparés par une distance D, des moyens de détermination périodique d'un jeu de 2p pseudo-distances entre le point A et p satellites d'une part, entre le point B et les p satellites d'autre part, des moyens pour fournir les pseudo-distances à un organe de calcul de position, des moyens pour effectuer n calculs de position relative du point A par rapport au point B à partir de n positions estimées initiales et d'un jeu de 2p pseudo-distances, les n positions estimées initiales étant toutes situées à une distance D du point B, des moyens pour calculer la distance $d_1$ à $d_n$ entre les n positions ainsi calculées $A_1$ à $A_n$ et le point B, des moyens pour sélectionner une position calculée $Ac_k$ parmi n, telle que l'écart entre la distance $d_k$ et la distance D soit inférieur en valeur absolue à un seuil déterminé, et des moyens pour calculer la direction du vecteur $BAc_k$, cette direction représentant une information sur l'orientation recherchée.

D'autres caractéristiques et avantages de l'invention apparaîtront à la lecture de la description détaillée qui suit et qui est faite en référence aux dessins annexés dans lesquels :

- la figure 1 représente schématiquement l'installation d'un dispositif selon l'invention sur un navire ;
- la figure 2 représente le dispositif selon l'invention ;
- la figure 3 représente la sphère de possibilités de positions du point A autour du point B ;
- la figure 4 représente une répartition de positions estimées initiales sur un anneau sphérique ;

- la figure 5 représente une répartition de ces positions sur un cercle ;
- la figure 6 représente un organigramme des calculs effectués.

Le dispositif de détermination d'orientation mis en place par exemple sur un navire comprend deux antennes 10 et 12 dont les centres sont situés à des positions A et B qui sont fixes par rapport au navire de telle sorte qu'il y ait un lien univoque entre la direction du vecteur BA et l'orientation du navire. Le vecteur BA peut être situé selon un axe longitudinal horizontal du navire, auquel cas il y a identité entre la direction du vecteur BA et le cap lorsque le bateau est horizontal. Mais le vecteur BA peut avoir une autre direction quelconque, pourvu que cette direction ait une composante horizontale qui seule permet de fournir un cap. Dans l'exemple représenté, le vecteur BA est horizontal et perpendiculaire à l'axe longitudinal du navire, pour permettre également une détermination du roulis. La distance BA peut-être de quelques dizaines de centimètres à quelques mètres.

Si on désire obtenir une information complète d'attitude (cap, roulis et tangage) il faut une troisième antenne, non représentée, à une position C non alignée avec BA, et on calcule la position relative du point C exactement de la même manière que la position du point A (le point B étant supposé être la référence des positions relatives).

Les antennes peuvent être fixées sur un mât du navire.

Les signaux radio issus des satellites de positionnement (système GPS ou autre) sont reçus par les antennes et utilisés par un ensemble électronique 14.

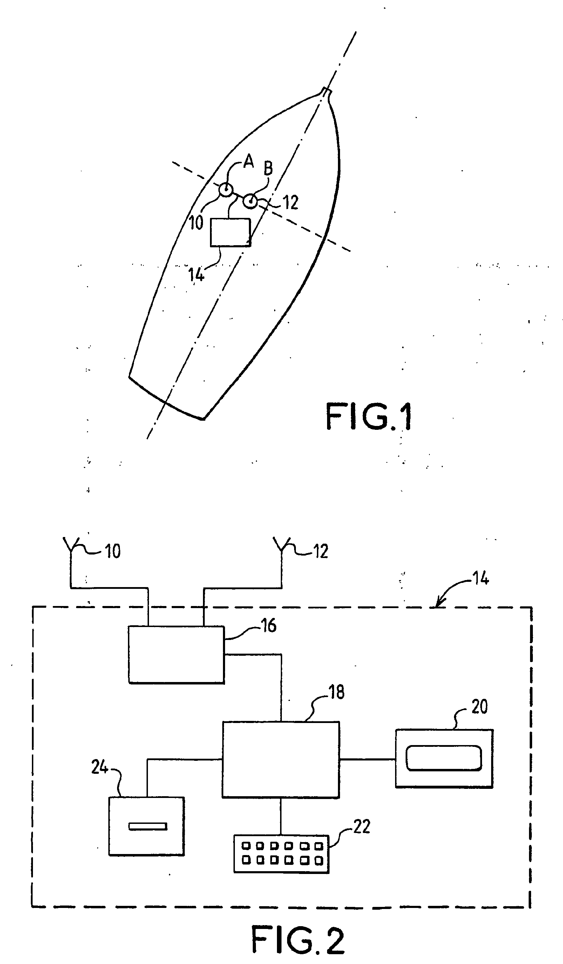

Cet ensemble électronique 14 comprend tout d'abord (figure 2) un récepteur de positionnement par satellite 16 capable de déterminer des mesures de pseudo-distances entre une antenne et plusieurs satellites. Par pseudo-distances on entend la mesure de temps de propagation radio entre le satellite et l'antenne, éventuellement affectée d'erreurs de synchronisation d'horloge qui sont classiquement éliminées par calcul dès lors qu'on reçoit les signaux d'au moins quatre satellites différents. Le temps de propagation est déterminé à la fois en référence à un instant de repère du code pseudo-aléatoire qui module une fréquence porteuse émise par le satellite, et en référence à la phase de la porteuse reçue, la mesure sur la phase, moins bruitée que la mesure sur le code, étant seule significative dans le cadre de l'invention du fait que les antennes sont très rapprochées.

Le récepteur 16 fournit périodiquement (par exemple toutes les 100 millisecondes) un jeu de 2p pseudo-distances lorsque p satellites sont en vue directe. Ces 2p pseudo-distances correspondent à p pseudo-distances des p satellites à la première antenne (point A) et p pseudo-distances des p satellites à la deuxième antenne (point B).

Le récepteur 16 peut être constitué en deux parties dédiées l'une à la première antenne pour fournir p pseudo-distances et l'autre à la deuxième antenne pour fournir simultanément p autres pseudo-distances. Mais on peut avoir aussi une seule partie connectée aux deux antennes par l'intermédiaire d'un multiplexeur pour déterminer d'abord les p premières pseudo-distances puis les p autres pseudo-distances. Dans ce cas, le récepteur ramène bien sûr les deux ensembles de pseudo-distances à un même instant de mesure avant de fournir le jeu complet de 2p pseudo-distances.

Le récepteur 16 fournit les 2p pseudo-distances à un organe de calcul de position relative 18 dont la fonction est de déterminer la position précise de l'antenne 10 (point A) par rapport à l'antenne 12 (point B), et d'en déduire l'information d'orientation désirée. On notera que le récepteur et l'organe de calcul peuvent utiliser un même microprocesseur, mais qu'on a re représenté ces deux éléments sous forme séparée pour simplifier la compréhension.

L'organe de calcul 18 est programmé pour effectuer les calculs désirés et est relié aux organes périphériques nécessaires selon les applications : afficheur 20, clavier 22, lecteur/enregistreur de données ou de programmes 24, moyen de transmission filaire ou radio vers un utilisateur, ou simple interface de sortie vers une ligne de transmission du résultat des calculs.

Les moyens de calcul prévus dans l'organe de calcul sont aptes à effectuer les opérations qu'on va détailler ci-après, à partir d'un jeu de 2p pseudo-distances fourni à un instant donné par le récepteur 16.

Le calcul de position est différentiel, c'est-à-dire qu'on détermine la position du point A par rapport au point B et non par rapport à un repère terrestre indépendant. On peut donc considérer dans la suite que le calcul de position consiste à calculer la position du point A à partir de mesures différentielles de pseudo-distances, en faisant des différences de pseudo-distances mesurées au point A et au point B. On précisera ce point plus loin en faisant par ailleurs intervenir une notion de doubles différences de pseudo-distances (différences entre couples de satellites).

Globalement, sous réserve de la notion classique de double différence qu'on précisera plus loin, le principe de calcul différentiel est le suivant:

- on calcule les positions des satellites à l'instant de mesure t, grâce aux éphémérides des satellites ;
- on détermine, à partir des mesures différentielles de pseudo-distances, les distances différentielles entre les points A et B selon les axes de visée des satellites. On obtient des distances qu'on peut considérer globalement comme les projections, le long de ces axes, de la distance entre A et B ; ce sont des distances mesurées ;
- on calcule parallèlement les distances le long des mêmes axes entre le point B et des positions estimées du point A (c'est-à-dire des hypothèses de position dont on parlera plus loin) ; ce sont des distances estimées ;
- on détermine selon chaque axe la différence entre la distance mesurée et la distance estimée, qu'on peut appeler grandeur d'écart ou « innovations » selon cet axe ;

- on calcule à partir de ces grandeurs d'écart, à l'aide de la matrice des cosinus directeurs représentant les directions des axes de visée des satellites, les écarts en longitude, latitude, altitude, entre la position mesurée du point A et la position estimée.
- on rajoute à la position estimée initiale les écarts calculés, et on obtient une position calculée du point A qui est soit une position définitive, soit une nouvelle position estimée en vue d'une étape ultérieure de calcul comme on le verra plus loin.
- on convertit les valeurs de position définitives du point A en informations d'orientation désirées (cap, roulis par exemple).

On voit donc que ce type de calcul fait intervenir des positions estimées. Un élément essentiel de la présente invention réside dans, le fait qu'on exécute successivement, à partir du même jeu de pseudo-distances plusieurs calculs de position du point A en utilisant différentes positions estimées initiales, et dans le fait qu'on sélectionne un résultat parmi les différents calculs effectués pour le même jeu de pseudo-distances.

On va donc expliquer d'abord les conditions du choix de positions estimées initiales et de la sélection du résultat avant de donner plus de détails sur une manière de mettre en oeuvre les calculs dans un exemple préféré de réalisation de l'invention.

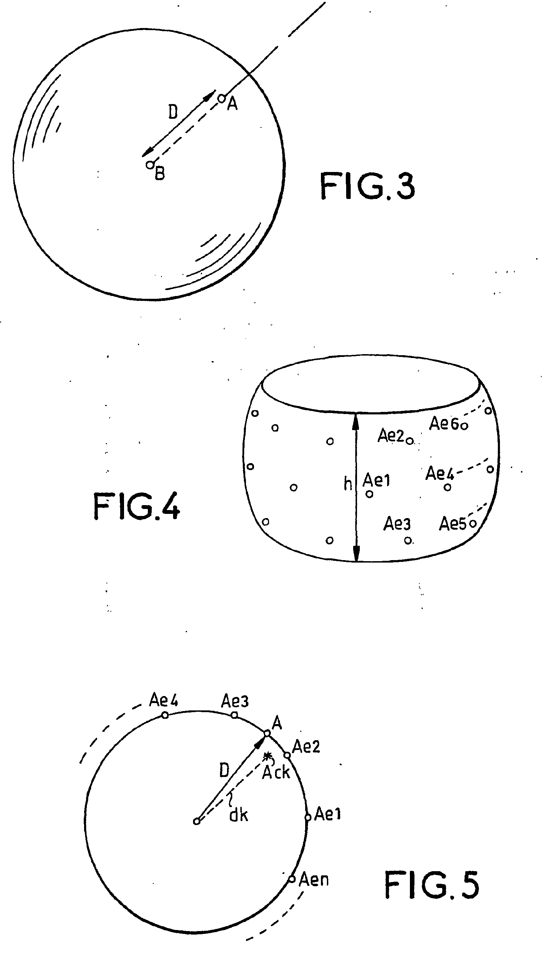

La figure 3 représente la sphère de centre B et de rayon D sur laquelle peut se trouver le point A selon l'orientation du mobile dans le repère terrestre, où D représente la distance parfaitement connue entre les centres A et B des antennes fixées au navire. Toutefois, pour une application maritime, on peut considérer plutôt que le point A peut se déplacer sur un anneau sphérique (figure 4) dont la hauteur h est définie par le roulis maximum que peut présenter le navire.

On choisit n positions estimées du point A, réparties le long de cet anneau sphérique et désignées par $Ae_1$ à $Ae_n$. Ces positions sont des hypothèses de départ pour le calcul de la position réelle du point A.

Pour simplifier les explications, on considérera que le navire n'a que peu de roulis ou tangage, ou bien que les mesures de cap ne sont validées que dans les phases ou l'inclinaison du navire est faible.

Dans ce cas, on peut se contenter de répartir les positions estimées à la périphérie d'un cercle horizontal de centre B et de rayon D. C'est cette configuration qui est représentée à la figure 5.

Les positions successives sont séparées d'une distance qui, de préférence, n'excède pas la longueur d'onde $\lambda$ de la fréquence porteuse du signal satellite (environ 20 cm pour la fréquence L1 du système GPS seule la fréquence L1 ayant d'ailleurs besoin d'être utilisée pour obtenir la détermination rapide de cap souhaitée). Le nombre n de positions estimées est alors au moins égal à la partie entière de $1+ 2\pi D/\lambda$ pour couvrir tout le cercle, par exemple au moins 12 ou 13 positions pour D=40 cm (valeur typique). Si on prenait en compte la nécessité de faire des mesures de cap même en présence d'une inclinaison importante du navire, on pourrait choisir environ 25 à 50 positions estimées initiales au lieu de 12 ou 13, sur l'anneau sphérique de la figure 4 et non sur le cercle de la figure 5. Ces positions successives seraient encore séparées d'environ $\lambda$ ou moins.

Lorsque la différence entre la position calculée du point de mesure et la position estimée (qui sert à ce calcul) est inférieure à la demi-longueur d'onde de la fréquence porteuse, la qualité du calcul est considérée comme suffisante pour que la position calculée corresponde avec certitude à la position réelle. C'est la raison du choix de l'espacement d'environ $\lambda$ entre les positions estimées successives. Il est évident qu'on pourrait encore rapprocher ces positions, ce qui ne ferait qu'accroître cette certitude, mais ce qui oblige à augmenter le nombre n de calculs de position effectués pour chaque jeu de mesures de pseudo-distances. Un espacement supérieur à $\lambda$ peut même être envisagé, notamment dans certaines configurations favorables de la constellation de satellites. Le choix d'un espacement presque égal à la longueur d'onde est un bon compromis entre sécurité et temps de calcul.

On part donc de la première position estimée initiale, $Ae_1$, on calcule la position du point A à partir de cette position estimée selon le principe de calcul exposé globalement plus haut et qui sera détaillé plus loin, et on aboutit à une position calculée $Ac_1$ qui ne se trouve pas nécessairement sur le cercle (ou sur la sphère) des positions estimées. En même temps qu'on calcule la position $Ac_1$ du point A, on calcule aussi une évaluation de la validité de cette mesure. Cette évaluation est classique en matière de GPS. Elle se fonde en général sur le calcul de la valeur quadratique moyenne des résidus et elle aboutit à une valeur de cohérence plus ou moins élevée représentant la fiabilité plus ou moins grande de la mesure ; la valeur de cohérence peut être tout simplement l'inverse ou l'opposé de cette valeur quadratique. Les résidus sont les distances entre la position du point calculé et les droites représentant les équations linéaires servant à la détermination du point calculé lorsqu'il y a plus d'équations que d'inconnues (plus de quatre satellites).

On refait le calcul de position $Ac_1$, $Ac_2$ ...$Ac_n$ en partant de chaque position estimée $Ae_1$, $Ae_2$, ... , $Ae_n$, toujours avec le même jeu de pseudo-distances. On calcule aussi à chaque fois la valeur de cohérence de la mesure. On calcule pour chaque position $Ac_1$ à $Ac_n$ la distance correspondante $d_1$ à $d_n$ par rapport au point B, et on compare cette distance à D puisqu'on sait que la position cherchée du point A devrait être sur la sphère de centre B et de rayon D.

On élimine les positions pour lesquelles l'écart $d_1$-D à $d_n$-D entre la distance à B et la valeur connue D dépasse un seuil déterminé (par exemple 1 centimète pour une distance AB de 40 centimètres).

On élimine de préférence également les positions pour lesquelles la valeur de cohérence de la mesure est inférieure à un seuil donné.

On peut encore également éliminer des positions ne répondant pas à certains critères liés à l'application : par exemple, pour la mesure du cap d'un navire, dans lequel le vecteur AB reliant les antennes est perpendiculaire à l'axe longitudinal du navire, et la mesure est donc sensible au roulis, on peut

- soit éliminer purement et simplement les mesures de position faites pendant que l'inclinaison de roulis est supérieure à une faible valeur donnée (par exemple 10°) ; il suffit alors de calculer la distance AB projetée dans le plan vertical et de la comparer à un seuil ; cela veut dire qu'on ne fait la mesure de cap que lorsque le navire est à peu près horizontal ;
- soit accepter les mesures faites lorsque le navire est incliné (notamment dans le cas où on s'intéresse à la mesure du cap et du roulis) mais éliminer les mesures lorsqu'elles indiquent (du fait des erreurs de mesure) une valeur de roulis qui ne semble pas plausible pour le navire ; on rejette alors les mesures dont le résultat indique un roulis supérieur à un seuil beaucoup plus élevé (par exemple 30°).

Ce qui vient d'être dit pour le roulis est évidemment transposable au tangage si le vecteur BA est dans l'axe longitudinal du navire.

Dans tous les cas, ces valeurs de seuil sont paramétrables et adaptées au type de navire ou aux conditions de navigation, et bien sûr à l'application envisagée lorsqu'il ne s'agit pas d'un navire.

Les n calculs effectués sur le jeu de pseudo-distances sont réalisés en un temps très bref, par exemple moins de 100 millisecondes. En général on aboutira à la sélection d'une seule valeur de position calculée $Ac_k$ satisfaisant aux différents critères.

Si on trouve plusieurs valeurs satisfaisant aux différents critères, ou au contraire si on ne trouve aucune valeur satisfaisante, on attend une nouvelle mesure effectuée sur un jeu de pseudo-distances différentes. Cependant, dans une variante de l'invention, on peut préférer conserver le même jeu de pseudo-distances et refaire une série de n autres calculs, en prenant comme positions estimées initiales des positions $A'e_1$ à $A'e_n$ intercalées régulièrement à mi-chemin entre les positions précédentes $Ae_1$ à $Ae_n$. La probabilité d'obtention d'une mesure unique satisfaisante dans cette deuxième tentative devient très élevée.

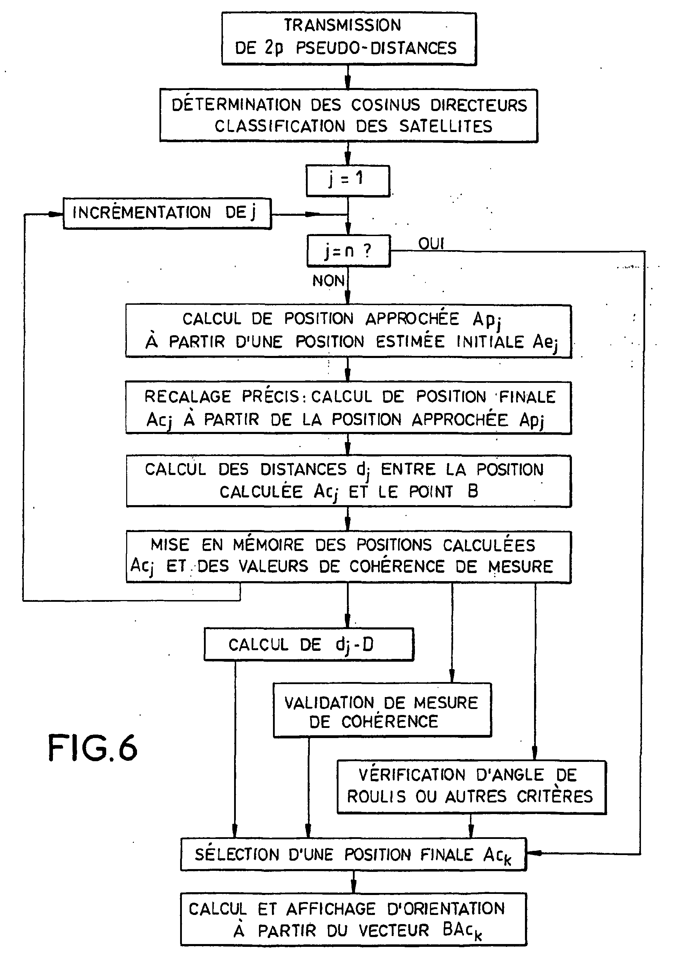

On va donner maintenant, à titre d'exemple, le détail du calcul qu'on peut faire pour l'obtention des différentes positions, montrant précisément comment la position estimée initiale intervient dans ce calcul. La figure 6 représente schématiquement les grandes phases des calculs effectués.

Chacun des n calculs est fait de préférence en deux phases, une phase d'obtention d'une position approchée $Ap_1$ à $Ap_n$, suivie d'une phase de recalage précis pour obtenir la position calculée $Ac_1$ à $Ac_n$ ; la sélection d'une mesure satisfaisant aux différents critères n'est effectuée que sur les positions finales calculées $Ac_1$ à $Ac_n$.

La phase d'obtention d'une position approchée $Ap_1$ à $Ap_n$ utilise une position estimée initiale $Ae_1$ à $Ae_n$ ; et elle utilise uniquement un sous-jeu de 2p' pseudo-distances choisies dans le jeu de 2p pseudo-distances.

Plus précisément, la géométrie de visibilité des p satellites à l'instant de la mesure étant connue grâce aux éphémérides, on sait classer les couples de satellites dans l'ordre de leur sensibilité croissante aux erreurs. On ne prend que les p' satellites correspondant aux couples les moins sensibles, p' de préférence égal à 4 pour simplifier les calculs. On peut obtenir par cette technique une position approchée intermédiaire entre la position estimée initiale et la position vraie.

On effectue le calcul des positions par un traitement en double différence, sur les 2p' pseudo-distances.

Le traitement dit « en double différence » consiste à travailler non pas directement à partir des pseudo-distances mais à partir de différences entre pseudo-distances.

Plus précisément, on calcule les doubles différences du type DDij = (Dia-Dja)-(Dib-Djb), dans lesquelles:

Dia est la pseudo-distance du point A au satellite de rang i
Dja est la pseudo-distance du point A au satellite de rang j
Dib est la pseudo-distance du point B au satellite de rang i
Djb est la pseudo-distance du point B au satellite de rang j

Les différences du type Dia-Dja ou Dib-Djb permettent d'éliminer les erreurs communes aux satellites. Les différences entre ces différences, ou doubles différences DDij, permettent d'éliminer les erreurs dues à la propagation atmosphérique ou ionosphérique, et les différences d'horloge entre les satellites et le récepteur.

Ces différences mesurées DDij sont comparées à des différences similaires calculées (et non mesurées) à partir des positions estimées initiales. La différence qui résulte de cette comparaison est appelée INNOVij, représentant l'écart entre l'estimation et la mesure.

Ces écarts sont reliés aux écarts de longitude, latitude, et altitude DL, DG et DA entre la position estimée (ici la position initiale $Ae_1$ à $Ae_n$) et la position calculée (ici la position calculée approchée $Ap_1$ à $Ap_n$) par des équations du type

$$INNOVij = DL[cos(Evi)cos(Azi)-cos(Evj)cos(Azj)]$$
$$+ DG[cos(Evi)sin(Azi)-cos(Evj)sin(Azj)]$$
$$+DA[sin(Evi)-sin(Evj)]$$

où $Evi$, $Evj$ sont les élévations des satellites i et j, et $Azi$, $Azj$ leurs azimuts.

Un calcul simple, ou un calcul matriciel avec minimisation des erreurs par la technique des moindres carrés si on a plus de 4 satellites, permet de déterminer DL, DG, DA qui représentent des écarts entre position mesurée et position estimée. Ces écarts sont ajoutés à la longitude, la latitude, et l'altitude du point estimé (ici l'un des points $Ae_1$ à $Ae_n$) pour obtenir un point calculé (ici un point approché $Ap_1$ à $Ap_n$).

Pour chaque position estimée on obtient une position approchée, et à partir de cette position approchée on effectue une deuxième étape de calcul. La deuxième étape est très semblable à la première, mais

- elle utilise toutes les 2p pseudo-distances
- elle utilise comme position estimée non pas les positions estimées initiales $Ae_1$ à $Ae_n$ mais les positions approchées $Ap_1$ à $Ap_n$
- elle utilise pour le calcul des positions finales $Ac_1$ à $Ac_n$ un calcul matriciel avec un nombre d'équations supérieur au nombre d'inconnues (le nombre p de satellites étant supposé supérieur à 4); la détermination des écarts DL, DG, DA entre position estimée et position calculée peut se faire alors classiquement par une méthode des moindres carrés (la position déterminée par calcul est celle qui minimise la valeur quadratique moyenne des résidus).

C'est au cours de ce calcul de position finale qu'on détermine la valeur de cohérence de la mesure (par exemple l'inverse de la valeur quadratique moyenne des résidus), en vue de la confirmation de la sélection d'une mesure de position parmi les n positions calculées.

La sélection d'une position, définitive $Ac_k$ se fait alors par calcul des distances au point B, comparaison à un seuil, vérification de la valeur de cohérence, sélection éventuelle sur d'autres critères supplémentaires tels que le roulis maximum (ou le tangage maximum si la ligne AB est dans l'axe longitudinal du navire) comme expliqué ci-dessus.

La direction du vecteur $BAc_k$ définit l'orientation recherchée. Sa projection dans le plan horizontal définit le cap (à une rotation près, connue par calibration initiale, si le vecteur BA n'est pas dans l'axe longitudinal du navire).

**Revendications**

1. Procédé de détermination de l'orientation d'un mobile, utilisant deux antennes (10, 12) de réception de signaux radio issus de satellites de positionnement, placées en deux points fixes A et B du mobile, ce procédé comprenant la détermination périodique d'un jeu de 2p pseudo-distances entre les deux antennes et p satellites, la fourniture des pseudo-distances à un organe de calcul de position (18), et le calcul par cet organe d'une position relative du point A par rapport au point B à partir d'une part des pseudo-distances et d'autre part d'une position relative estimée du point A par rapport au point B, ce procédé étant **caractérisé en ce que** le calcul de position relative comprend, pour un jeu donné de 2p pseudo-distances reçu par l'organe de calcul :

   - n calculs (n>1) de position relative du point A, faisant intervenir respectivement n positions estimées initiales $Ae_1$ à $Ae_n$, toutes situées à la même distance D du point B mais correspondant à n orientations différentes autour du point B, les n calculs fournissant n positions calculées $Ac_1$ à $Ac_n$ du point A,
   - le calcul des distances $d_1$ à $d_n$ entre chaque position calculée et le point B,
   - la sélection d'une position calculée $Ac_k$ telle que l'écart ($d_k$ -D) entre la distance correspondante $d_k$ et la distance D soit inférieur à un seuil déterminé,
   la direction du vecteur $BAc_k$ représentant l'information d'orientation recherchée.

2. Procédé selon la revendication 1, **caractérisé en ce que** les n calculs successifs sont effectués en deux étapes pour chacun des n calculs :

7

- dans une première étape un calcul de position approchée (Ap$_1$ à Ap$_n$) est effectué à partir d'une des n positions estimées initiales (Ae$_1$ à Ae$_n$) et d'un sous-jeu de 2p' pseudo-distances correspondant à p' satellites où p' est inférieur à p et où les p' satellites choisis dans la constellation de p satellites sont ceux qui ont, compte-tenu de la géométrie actuelle de la constellation, la plus faible sensibilité à une erreur de position estimée,

- puis, dans une deuxième étape, un calcul de la position relative (Ac$_1$ à Ac$_n$) du point A est effectué à partir du jeu complet de 2p pseudo-distances et d'une position estimée du point A qui est la position approchée (Ap$_1$ à Ap$_n$) calculée dans la première étape.

3.  Procédé selon l'une des revendications précédentes, **caractérisé en ce que** les n positions estimées initiales (Ae$_1$ à Ae$_n$) sont séparées les unes des autres d'une distance inférieure ou égale à la longueur d'onde λ de la fréquence porteuse des signaux issus des satellites.

4.  Procédé selon l'une des revendications précédentes, **caractérisé en ce que** les n calculs de positions du point A sont chacun accompagné d'un calcul de résidus fournissant une évaluation numérique de la cohérence de la mesure, et **en ce que** la cohérence est comparée à un seuil pour éliminer une position calculée si la cohérence correspondante est inférieure à ce seuil.

5.  Procédé selon l'une des revendications précédentes, pour la mesure d'un cap de navire en présence de roulis ou de tangage, **caractérisé en ce que** l'on calcule l'angle de roulis ou tangage défini par la position calculée du point A relativement au point B, et on élimine la position calculée si l'angle de roulis ou tangage dépasse un seuil déterminé.

6.  Procédé selon l'une des revendications précédentes, **caractérisé en ce que**, pour la détermination d'un cap, les n positions estimées initiales (Ae$_1$ à Ae$_n$) sont réparties au moins le long d'un cercle horizontal de centre B et de rayon D.

7.  Procédé selon la revendication 5, **caractérisé en ce que** si la longueur d'onde de la fréquence porteuse des signaux issus des satellites est λ, alors le nombre n est environ égal à la partie entière de 1 + 2πD/λ.

8.  Procédé selon l'une des revendications précédentes, **caractérisé en ce que** les calculs de position comprennent le calcul préalable de doubles différences, chaque double différence étant du type (Dia-Dja)-(Dib-Djb) où Dia et Dib représentent les pseudo-distances des points A et B à un satellite de rang i, et Dja et Djb représentent les pseudo-distances des points A et B à un satellite de rang j, les calculs de position étant effectués à partir des doubles différences et des positions estimées.

9.  Procédé selon l'une des revendications précédentes, **caractérisé en ce que**, dans le cas où aucune des n mesures ne sont validées par l'opération de sélection, on exécute n autres calculs à partir de n autres positions estimées initiales (A'e$_1$ à A'e$_n$) intercalées entre les premières positions estimées initiales (Ae$_1$ à Ae$_n$).

10. Procédé selon l'une des revendications précédentes, **caractérisé en ce que**, dans le cas ou plusieurs mesures sont validées par l'opération de sélection, on exécute n autres calculs à partir de n autres positions estimées initiales (Ae$_1$ à Ae$_n$) intercalées entre les premières positions estimées initiales (Ae$_1$ à Ae$_n$).

11. Dispositif de détermination de l'orientation d'un mobile, comprenant au moins deux antennes de réception de signaux de positionnement par satellite, fixées sur le mobile en deux points A et B séparés par une distance D, des moyens de détermination périodique d'un jeu de 2p pseudo-distances entre le point A et p satellites d'une part, entre le point B et les p satellites d'autre part, des moyens de fourniture des pseudo-distances à un organe de calcul de position, des moyens pour effectuer n calculs de position relative du point A par rapport au point B à partir de n positions estimées initiales et d'un jeu de 2p pseudo-distances, les n positions estimées initiales étant toutes situées à une distance D du point B, des moyens pour calculer la distance d$_1$ à d$_n$ entre les n positions ainsi calculées A$_1$ à A$_n$ et le point B, des moyens pour sélectionner une position calculé Ac$_k$ parmi n, telle que l'écart entre la distance d$_k$ et la distance D soit inférieur à un seuil déterminé, et des moyens pour calculer la direction du vecteur BAc$_k$ représentant une information sur l'orientation recherchée.

**Claims**

1.  Process for determining the orientation of a mobile, using two antennas (10, 12) for receiving radio signals emanating from positioning satellites, which antennas are placed at two fixed points A and B of the mobile, this process comprising the periodic determination of a set of 2p pseudo-distances between the two antennas and p satellites, the delivery of the pseudo-distances to a position calculating facility (18), and the calculation by this facility of a relative position of the point A with respect to the point B on the basis, on the one hand, of the pseudo-distances and, on the other hand, of an estimated relative position of the point A with respect to the point B, this process being **characterized in that** the calculation of relative position comprises, for a given set of 2p pseudo-distances received by the calculating facility:

- n calculations (n>1) of relative position of the point A, respectively involving n initial estimated positions $Ae_1$ to $Ae_n$, all situated at the same distance D from the point B but corresponding to n different orientations about the point B, the n calculations delivering n calculated positions $Ac_1$ to $Ac_n$ of the point A,
- the calculation of the distances $d_1$ to $d_n$ between each calculated position and the point B,
- the selection of a calculated position $Ac_K$ such that the discrepancy $(d_k$-D) between the corresponding distance $d_k$ and the distance D is less than a specified threshold,
- the direction of the vector $BAc_k$ representing the sought-after orientation information.

2. Process according to Claim 1, **characterized in that** the n successive calculations are performed in two steps for each of the n calculations:

- in a first step, a calculation of approximate position ($Ap_1$ to $Ap_n$) is performed on the basis of one of the n initial estimated positions ($Ae_1$ to $Ae_n$) and of a subset of 2p' pseudo-distances corresponding to p' satellites where p' is less than p and where the p' satellites chosen from the constellation of p satellites are those which, given the current geometry of the constellation, have the lowest sensitivity to an estimated position error,
- then, in a second step, a calculation of the relative position ($Ac_1$ to $Ac_n$) of the point A is performed on the basis of the complete set of 2p pseudo-distances and of an estimated position of the point A which is the approximate position ($Ap_1$ to $Ap_n$) calculated in the first step.

3. Process according to either of the preceding claims, **characterized in that** the n initial estimated positions ($Ae_1$ to $Ae_n$) are separated from one another by a distance less than or equal to the wavelength $\lambda$ of the carrier frequency of the signals emanating from the satellites.

4. Process according to one of the preceding claims, **characterized in that** the n calculations of positions of the point A are each accompanied by a calculation of residuals delivering a numerical evaluation of the consistency of the measurement, and **in that** the consistency is compared with a threshold so as to eliminate a calculated position if the corresponding consistency is less than this threshold.

5. Process according to one of the preceding claims, for the measurement of a ship's heading in the presence of roll or pitch, **characterized in that** the angle of roll or pitch defined by the calculated position of the point A relative to the point B is calculated, and the calculated position is eliminated if the angle of roll or pitch exceeds a specified threshold.

6. Process according to one of the preceding claims, **characterized in that**, for the determination of a heading, the n initial estimated positions ($Ae_1$ to $Ae_n$) are distributed at least along a horizontal circle with centre B and radius D.

7. Process according to Claim 5, **characterized in that** if the wavelength of the carrier frequency of the signals emanating from the satellites is $\lambda$, then the number n is roughly equal to the integer part of $1 + 2\pi D/\lambda$.

8. Process according to one of the preceding claims, **characterized in that** the position calculations comprise the prior calculation of double differences, each double difference being of the type (Dia-Dja)-(Dib-Djb) where Dia and Dib represent the pseudo-distances of the points A and B from a satellite of rank i, and Dja and Djb represent the pseudo-distances of the points A and B from a satellite of rank j, the position calculations being performed on the basis of the double differences and of the estimated positions.

9. Process according to one of the preceding claims, **characterized in that**, in the case where none of the n measurements is validated by the selection operation, n other calculations are executed on the basis of n other initial estimated positions ($A'e_1$ to $A'e_n$) interposed between the first initial estimated positions ($Ae_1$ to $Ae_n$).

10. Process according to one of the preceding claims, **characterized in that**, in the case where several measurements are validated by the selection operation, n other calculations are executed on the basis of n other initial estimated

positions ($Ae_1$ to $Ae_n$) interposed between the first initial estimated positions ($Ae_1$ to $Ae_n$) .

11. Device for determining the orientation of a mobile, comprising at least two antennas for receiving satellite-based positioning signals, which antennas are fixed on the mobile at two points A and B separated by a distance D, means of periodic determination of a set of 2p pseudo-distances between the point A and p satellites on the one hand, between the point B and the p satellites on the other hand, means of delivery of the pseudo-distances to a position calculating facility, means for performing n calculations of relative position of the point A with respect to the point B on the basis of n initial estimated positions and of a set of 2p pseudo-distances, the n initial estimated positions all being situated at a distance D from the point B, means for calculating the distance $d_1$ to $d_n$ between the n positions thus calculated $A_1$ to $A_n$ and the point B, means for selecting a calculated position $Ac_k$ from among n, such that the discrepancy between the distance $d_k$ and the distance D is less than a specified threshold, and means for calculating the direction of the vector $BAc_k$ representing information regarding the sought-after orientation.

**Patentansprüche**

1. Verfahren zum Bestimmen der Orientierung eines mobilen Geräts unter Verwendung von zwei Antennen (10, 12) zum Empfangen von von Positionierungssatelliten stammenden Funksignalen, die an zwei festen Punkten A und B des mobilen Geräts angeordnet sind, wobei dieses Verfahren das periodische Bestimmen eines Satzes von 2p Pseudoabständen zwischen den zwei Antennen und p Satelliten, das Liefern der Pseudoabstände zu einem Positionsberechnungsorgan (18) und das Berechnen einer relativen Position des Punkts A in Bezug auf den Punkt B anhand einerseits der Pseudoabstände und andererseits einer geschätzten relativen Position des Punkts A in Bezug auf den Punkt B durch dieses Organ enthält, wobei dieses Verfahren **dadurch gekennzeichnet ist, dass** das Berechnen der relativen Position für einen gegebenen Satz von 2p Pseudoabständen, die von dem Rechenorgan empfangen werden, enthält:

   - n Berechnungen (n > 1) der relativen Position des Punkts A unter Verwendung von n jeweiligen geschätzten Anfangspositionen $Ae_1$ bis $Ae_n$, die sich alle im selben Abstand D vom Punkt B befinden, jedoch n verschiedenen Orientierungen um den Punkt B entsprechen, wobei die n Berechnungen n berechnete Positionen $Ac_1$ bis $Ac_n$ des Punkts A ergeben,
   - Berechnen von Abständen $d_1$ bis $d_n$ zwischen jeder berechneten Position und dem Punkt B,
   - Auswählen einer berechneten Position $Ac_k$, derart, dass die Abweichung ($d_k$ - D) zwischen dem entsprechenden Abstand $d_k$ und dem Abstand D kleiner als ein bestimmter Schwellenwert ist,

   wobei die Richtung des Vektors $BAc_k$ die gesuchten Orientierungsinformationen repräsentiert.

2. Verfahren nach Anspruch 1, **dadurch gekennzeichnet, dass** die n aufeinander folgenden Berechnungen für jede der n Berechnungen in zwei Schritten ausgeführt werden:

   - in einem ersten Schritt wird eine Berechnung einer genäherten Position ($Ap_1$ bis $Ap_n$) anhand einer der n geschätzten Anfangspositionen ($Ae_1$ bis $Ae_n$) und eines Untersatzes von 2p' Pseudoabständen, die p' Satelliten entsprechen, wobei p' kleiner als p ist und wobei die p' Satelliten, die in der Konstellation von p Satelliten gewählt werden, jene sind, die unter Berücksichtigung der aktuellen Geometrie der Konstellation die geringste Empfindlichkeit für einen geschätzten Positionsfehler haben, ausgeführt,
   - dann wird in einem zweiten Schritt eine Berechnung der relativen Position ($Ac_1$ bis $Ac_n$) des Punkts A anhand des vollständigen Satzes von 2p Pseudoabständen und einer geschätzten Position des Punkts A, die die im ersten Schritt berechnete genäherte Position ($Ap_1$ bis $Ap_n$) ist, ausgeführt.

3. Verfahren nach einem der vorhergehenden Ansprüche, **dadurch gekennzeichnet, dass** die n geschätzten Anfangspositionen ($Ae_1$ bis $Ae_n$) voneinander um eine Strecke getrennt sind, die kleiner oder gleich der Wellenlänge $\lambda$ der Trägerfrequenz der von dem Satelliten stammenden Signale ist.

4. Verfahren nach einem der vorhergehenden Ansprüche, **dadurch gekennzeichnet, dass** die n Berechnungen der Positionen des Punkts A jeweils von einer Berechnung von Resten begleitet werden, die eine numerische Auswertung der Kohärenz der Messung ergeben, und dass die Kohärenz mit einem Schwellenwert verglichen wird, um eine berechnete Position zu eliminieren, falls die entsprechende Kohärenz kleiner als dieser Schwellenwert ist.

5. Verfahren nach einem der vorhergehenden Ansprüche zum Messen eines Schiffskurses in Gegenwart von Rollen oder Stampfen, **dadurch gekennzeichnet, dass** der Roll- oder Stampfwinkel, der durch die berechnete Position des Punkts A relativ zum Punkt B definiert ist, berechnet wird und dass die berechnete Position eliminiert wird, falls der Roll- oder Stampfwinkel einen bestimmten Schwellenwert übersteigt.

6. Verfahren nach einem der vorhergehenden Ansprüche, **dadurch gekennzeichnet, dass** für die Bestimmung eines Kurses die n geschätzten Anfangspositionen ($Ae_1$ bis $Ae_n$) wenigstens längs eines horizontalen Kreises mit Zentrum B und Radius D verteilt sind.

7. Verfahren nach Anspruch 5, **dadurch gekennzeichnet, dass** dann, wenn die Wellenlänge der Trägerfrequenz der von den Satelliten stammenden Signale durch $\lambda$ gegeben ist, die Anzahl n ungefähr gleich dem ganzzahligen Anteil von $1 + 2\pi D/\lambda$ ist.

8. Verfahren nach einem der vorhergehenden Ansprüche, **dadurch gekennzeichnet, dass** die Positionsberechnungen die vorherige Berechnung doppelter Differenzen enthält, wobei jede doppelte Differenz vom Typ (Dia - Dja) - (Dib - Djb) ist, wobei Dia und Dib die Pseudoabstände der Punkte A bzw. B zu einem Satelliten mit Rang i repräsentieren und Dja und Djb die Pseudoabstände der Punkte A bzw. B zu einem Satelliten mit Rang j repräsentieren, wobei die Positionsberechnungen anhand der doppelten Differenzen und der geschätzten Positionen ausgeführt werden.

9. Verfahren nach einem der vorhergehenden Ansprüche, **dadurch gekennzeichnet, dass** in dem Fall, in dem keine der n Messungen durch die Auswahloperation für gültig erklärt wird, n weitere Berechnungen anhand von n weiteren geschätzten Anfangspositionen ($A'e_1$ bis $A'e_n$), die mit den ersten geschätzten Anfangspositionen ($Ae_1$ bis $Ae_n$) verschachtelt sind, ausgeführt werden.

10. Verfahren nach einem der vorhergehenden Ansprüche, **dadurch gekennzeichnet, dass** in dem Fall, in dem mehrere Messungen für die Auswahloperation für gültig erklärt werden, n weitere Berechnungen anhand von n weiteren geschätzten Anfangspositionen ($Ae_1$ bis $Ae_n$), die mit den ersten geschätzten Anfangspositionen ($Ae_1$ bis $Ae_n$) verschachtelt sind, ausgeführt werden.

11. Vorrichtung zum Bestimmen der Orientierung eines mobilen Geräts, mit wenigstens zwei Empfangsantennen für Satellitenpositionssignale, die an dem mobilen Gerät an zwei Punkten A und B befestigt sind, die durch einen Abstand D getrennt sind, Mitteln zum periodischen Bestimmen eines Satzes von 2p Pseudoabständen zwischen dem Punkt A und p Satelliten einerseits und zwischen dem Punkt B und den p Satelliten andererseits, Mitteln zum Liefern von Pseudoabständen zu einem Positionsberechnungsorgan, Mitteln zum Ausführen von n Positionsberechnungen bezüglich des Punkts A in Bezug auf den Punkt B anhand von n geschätzten Anfangspositionen und eines Satzes von 2p Pseudoabständen, wobei sich die n geschätzten Anfangspositionen alle in einem Abstand D vom Punkt B befinden, Mitteln zum Berechnen des Abstandes $d_1$ bis $d_n$ zwischen den n somit berechneten Positionen $A_1$ bis $A_n$ und dem Punkt B, Mitteln zum Auswählen einer berechneten Position $Ac_k$ unter n Positionen, derart, dass der Abstand zwischen dem Abstand $d_k$ und dem Abstand D kleiner als ein bestimmter Schwellenwert ist, und Mitteln zum Berechnen der Richtung des Vektors $BAc_k$, die eine Information über die gesuchte Orientierung repräsentiert.

FIG.1

FIG.2

FIG.3

FIG.4

FIG.5

TRANSMISSION
DE 2p PSEUDO-DISTANCES

DÉTERMINATION DES COSINUS DIRECTEURS
CLASSIFICATION DES SATELLITES

$j = 1$

INCRÉMENTATION DE $j$

$j = n$ ?     OUI

NON

CALCUL DE POSITION APPROCHÉE $Ap_j$
À PARTIR D'UNE POSITION ESTIMÉE INITIALE $Ae_j$

RECALAGE PRÉCIS : CALCUL DE POSITION FINALE
$Ac_j$ À PARTIR DE LA POSITION APPROCHÉE $Ap_j$

CALCUL DES DISTANCES $d_j$ ENTRE LA POSITION
CALCULÉE $Ac_j$ ET LE POINT B

MISE EN MÉMOIRE DES POSITIONS CALCULÉES
$Ac_j$ ET DES VALEURS DE COHÉRENCE DE MESURE

CALCUL DE $d_j - D$

VALIDATION DE MESURE
DE COHÉRENCE

**FIG.6**

VÉRIFICATION D'ANGLE DE
ROULIS OU AUTRES CRITÈRES

SÉLECTION D'UNE POSITION FINALE $Ac_k$

CALCUL ET AFFICHAGE D'ORIENTATION
À PARTIR DU VECTEUR $BAc_k$